# EUROPÄISCHE PATENTANMELDUNG

(11) **EP 3 821 707 A1**
(43) Veröffentlichungstag der Anmeldung: **19.05.2021**
(21) Anmeldenummer: 20401058.1
(22) Anmeldetag: 02.11.2020
(51) Int. Cl.: A01M 7/00

(54) **VERFAHREN ZUM ERFASSEN DES ABSTANDS EINES GESTÄNGES ZU EINER LANDWIRTSCHAFTLICHEN NUTZFLÄCHE UND/ODER DEREN PFLANZENBESTAND**

(30) Priorität: 13.11.2019 DE 102019130576
(71) Anmelder: Amazonen-Werke H. Dreyer SE & Co. KG, 49205 Hasbergen (DE)
(72) Erfinder: Kühn, Christoph, 49186 Bad Iburg (DE); große Prues, Frank, 49593 Bersenbrück (DE); Heer, Jochen, 49074 Osnabrück (DE)

(57) **Zusammenfassung**

Verfahren zum Erfassen des Abstands (A) eines Gestänges (102) eines landwirtschaftlichen Spritzgeräts (100), insbesondere einer Feldspritze, zu einer landwirtschaftlichen Nutzfläche (N) und/oder deren Pflanzenbestand (P), mit dem Schritt: Erzeugen zumindest eines Messwertes mittels zumindest einer Sensoreinheit (12a-12c, 14a-14c), vorzugsweise mehreren Sensoreinheiten (12a-12c, 14a-14c), wobei die zumindest Sensoreinheit (12a-12c, 14a-14c), vorzugsweise die mehreren Sensoreinheiten (12a-12c, 14a-14c) beabstandet voneinander, an einem Gestänge (102) des landwirtschaftlichen Spritzgeräts (100) angeordnet ist und der zumindest eine Messwert Umgebungsinformationen der jeweiligen Sensoreinheit (12a-12c, 14a-14c) umfasst. Um die Erfassung des Abstands eines Gestänges (102) eines landwirtschaftlichen Spritzgeräts (100) zu einer landwirtschaftlichen Nutzfläche (N) und/oder deren Pflanzenbestand (P) weiter zu verbessern ist vorgesehen, dass der zumindest eine Messwert von zumindest einer Sensoreinheit (12a-12c, 14a-14c) in Abhängigkeit zumindest eines, vorzugsweise vorgegebenen und/oder der zumindest einen Sensoreinheit (12a-12c, 14a-14c) zugeordneten, Referenzwertes (22) bewertet wird.

## Beschreibung

Die Erfindung betrifft ein Verfahren zum Erfassen des Abstands eines Gestänges eines landwirtschaftlichen Spritzgeräts, insbesondere einer Feldspritze, zu einer landwirtschaftlichen Nutzfläche und/oder deren Pflanzenbestand nach dem Oberbegriff des Patentanspruchs 1, ein Verfahren zum Führen eines Gestänges eines landwirtschaftlichen Spritzgeräts, insbesondere einer Feldspritze, nach dem Oberbegriff des Patentanspruchs 9, ein Steuerungssystem für ein landwirtschaftliches Spritzgerät, insbesondere für eine Feldspritze, nach dem Oberbegriff des Patentanspruchs 10 und ein landwirtschaftliches Spritzgerät, insbesondere eine Feldspritze, nach dem Oberbegriff des Patentanspruchs 11.

In einer Vielzahl von Anwendungsfällen, insbesondere in der Landwirtschaft, werden Spritzgeräte, insbesondere Feldspritzen, zum Ausbringen von Spritzmitteln, insbesondere Pflanzenschutzmittel, auf einer landwirtschaftlichen Nutzfläche eingesetzt. Gattungsgemäße Feldspritzen umfassen hierbei zumindest einen Vorratsbehälter von dem aus das Fluid über zumindest eine Versorgungsleitung und diesen nachgeordnete Ausbringeinrichtungen, insbesondere Spritzdüsen, auf der landwirtschaftlichen Nutzfläche und/oder deren Pflanzenbestand ausgebracht wird. Hierbei ist für ein optimales Ausbringergebnis der Abstand zwischen den Ausbringeinrichtungen und der landwirtschaftlichen Fläche und/oder deren Pflanzenbestand während des Ausbringens von außerordentlicher Wichtigkeit.

Um den Abstand zwischen den Ausbringeinrichtungen und der landwirtschaftlichen Nutzfläche und/oder deren Pflanzenbestand zumindest teilweise zu beeinflussen, sind die Ausbringeinrichtungen landwirtschaftlicher Spritzgeräte, insbesondere Feldspritzen, typischerweise an zumindest einem, vorzugsweise mittels Aktoren, höhenverstellbaren Gestänge angeordnet. Zusätzlich umfassen moderne landwirtschaftliche Spritzgeräte zumindest eine an dem Gestänge angeordnete Sensoreinheit, die dazu eingerichtet ist, den Abstand zu einer landwirtschaftlichen Nutzfläche und/oder deren Pflanzenbestand zu erfassen. Der erfasste Abstand zu der landwirtschaftlichen Nutzfläche und/oder deren Pflanzenbestand wird dann zur Führung, insbesondere zur Höhenführung, des Gestänges genutzt.

In der unveröffentlichten DE 10 2018 128 378.4 ist ein derartiges landwirtschaftliches Spritzgerät zum Erfassen des Abstands eines Gestänges zu einer landwirtschaftlichen Nutzfläche und/oder deren Pflanzenbestand beschrieben. Ein Steuerungssystem umfasst hierbei zumindest eine Sensoreinheit, welche dazu eingerichtet ist, Messwerte mit Umgebungsinformationen der jeweiligen Sensoreinheit zu erzeugen. Des Weiteren dient zumindest eine Datenverarbeitungseinrichtung dazu, die von der zumindest einen Sensoreinheit zur Verfügung gestellten Messwerte zu verarbeiten. Das Steuerungssystem ist somit dazu eingerichtet, den Abstand des Gestänges zu einer landwirtschaftlichen Nutzfläche und/oder deren Pflanzenbestand zu erfassen und/oder das Gestänge, insbesondere in einer Höhenrichtung, zu führen.

Nachteilig an diesem Aufbau ist unter anderem, dass zu einer Bewertung bzw. Auswertung eines Messwertes zumindest ein Messwert der gleichen und/oder einer anderen Sensoreinheit herangezogen wird. Ist zumindest eine Sensoreinheit nicht ordnungsgemäß ausgerichtet, beispielsweise auf zumindest eine Oberfläche zumindest einer Geometrie innerhalb und/oder außerhalb des Spritzgerätes, kann dies zu eine Fehlinterpretation des Abstands und somit einer nicht korrekt ausgeführten Führung des Gestänges, insbesondere der Ausbringeinrichtungen, führen. Ist eine und/oder sind mehrere, insbesondere alle, Sensoreinheiten somit beispielsweise auf die Oberfläche des Gestänges, insbesondere einen in eine Höhenrichtung mitgeführten Teil des Gestänges, ausgerichtet, kann dies dazu führen, dass das Gestänge irrtümlicherweise bis zum maximalen Ausschlag der Aktoren angehoben wird.

Die der Erfindung zugrunde liegende Aufgabe besteht somit darin, die Erfassung des Abstands eines Gestänges eines landwirtschaftlichen Spritzgeräts zu einer landwirtschaftlichen Nutzfläche und/oder deren Pflanzenbestand weiter zu verbessern.

Die Aufgabe wird gelöst durch ein Verfahren der eingangs genannten Art, wobei zumindest ein Messwert von zumindest einer Sensoreinheit in Abhängigkeit zumindest eines, vorzugsweise vorgegebenen und/oder der zumindest einen Sensoreinheit zugeordneten, Referenzwertes bewertet wird.

Infolge dieser Maßnahme wird somit zur Erfassung des Abstands zur landwirtschaftlichen Fläche und/oder deren Pflanzenbestand neben den von den Sensoreinheiten erfassten Messerwerten außerdem zumindest ein Referenzwert berücksichtigt. Hierbei kann es sich um einen globalen für alle Sensoreinheiten gleichen und/oder bevorzugt einen den jeweiligen Sensoreinheiten zugeordneten angepassten Referenzwert handeln. Der Referenzwert kann unterschiedliche, vorzugsweise physikalische, Größen wie beispielsweise einen Vektor und/oder einen Skalar umfassen. Darüber hinaus können hierunter auch Beträge wie beispielsweise ein Abstand und/oder eine Distanz, vorzugsweise zwischen zumindest zwei Punkten und/oder geometrischen Objekten, verstanden werden.

Der Referenzwert ist erfindungsgemäß bevorzugt statisch ausgebildet und von zumindest einem dem Spritzgerät zugeordnetem Steuerungssystem abrufbar. Der zumindest eine Referenzwert kann hierbei auf das Steuerungssystem übertragen und/oder durch einen Bediener, vorzugsweise mittels eines mobilen Eingabegerätes, eingegeben werden. Alternativ oder zusätzlich kann der Referenzwert eine mittels zumindest einer Sensoreinheit erfassten Größe umfassen.

Darüber hinaus kann der zumindest eine Referenzwert beispielsweise abhängig von einer jeweiligen Montageposition zumindest einer Sensoreinheit an dem Gestänge des landwirtschaftlichen Spritzgeräts sein. Somit stellt der Referenzwert hierbei einen individuell auf jede Sensoreinheit angepassten Referenzwert dar.

Besonders bevorzugt ist ein Verfahren bei dem neben dem zumindest einen Referenzwert außerdem die Messwerte und/oder zumindest ein Durchschnittsmesswert mehrerer an dem Gestänge angeordneter Sensoreinheiten berücksichtigt werden. Somit ist das Messergebnis und damit das Steuern und/oder Regeln des Gestänges neben einem vordefinierten, insbesondere absoluten, Referenzwert außerdem von einem, insbesondere variablen, Messwert mehrerer Sensoreinheiten abhängig. Damit ist eine besonders präzise Abstandserfassung mit deutlich gesteigerter Störgrößenfilterung erreichbar.

In einer bevorzugten Ausführungsform des erfindungsgemäßen Verfahrens umfasst der zumindest eine Referenzwert zumindest einen Grenzwert und/oder zumindest einen Grenzbereich. Hierbei kann der zumindest eine Grenzwert und/oder der zumindest eine Grenzbereich innerhalb einer Steuerungs- und/oder Regelungsroutine des Spritzgerätes mit dem zumindest einen erfassten und/oder erzeugten Messwert der zumindest einen Sensoreinheit berücksichtigt, insbesondere verglichen, und somit automatisiert und/oder durch einen Bediener als plausibel oder nicht plausibel eingestuft werden. Je nach dem Ergebnis einer derartig ausgestalteten Plausibilitätsüberprüfung kann der zumindest eine Messwert zur weiteren Verarbeitung innerhalb des erfindungsgemäßen Verfahrens weiter berücksichtigt oder ignoriert werden. Der Grenzwert ist bevorzugt in Form eines vorgegebenen Abstands definiert. Der Grenzbereich stellt vorzugsweise einen Bereich zwischen zumindest zwei Grenzwerten dar. Darüber hinaus ist denkbar mehrere unterschiedliche Grenzwerte und/oder Grenzbereiche, vorzugsweise mit unterschiedlichen Auswirkungen für das erfindungsgemäße Verfahren und/oder dem Führen des Gestänges zu verwenden. Unter anderem ist somit sichergestellt, dass das Gestänge erst beim Erreichen einer positiven Plausibilitätsprüfung und somit einem plausiblen Messwert reagiert und dementsprechend geführt oder eine Position und/oder Ausrichtung des Gestänges beibehalten wird.

In einer anderen bevorzugten Ausführungsform des erfindungsgemäßen Verfahrens umfasst der zumindest eine Referenzwert Informationen über den Abstand zwischen der jeweiligen Sensoreinheit und zumindest einer Oberfläche des Gestänges, insbesondere einer an dem Gestänge angeordneten Ausbringeinrichtung. Der Abstand zwischen der Sensoreinheit und dem Gestänge kann hierbei von einer Messoberfläche der Sensoreinheit bis zu einer Austrittsöffnung der Ausbringeinrichtung, die vorzugsweise an einer Unterseite des Gestänges angeordnet ist, reichen. Bei der Verwendung unterschiedlicher Ausbringeinrichtungen entlang des Gestänges, insbesondere quer zu einer Fahrtrichtung, ist ein auf die jeweiligen Ausbringeinrichtungen variabel abgestimmter Referenzwert, der den jeweiligen Sensoreinheiten zugeordnet ist, besonders vorteilhaft. Oberflächen die von der Sensoreinheit innerhalb des Abstands zwischen der Sensoreinheit und dem Gestänge, insbesondere der Ausbringeinrichtung, erfasst werden, können somit unter Berücksichtigung des Referenzwertes innerhalb der Steuerungs- und/oder Regelungsroutine des Spritzgeräts ausgeblendet bzw. ignoriert werden. Bei derartigen Oberflächen kann es sich beispielsweise um zumindest einen Teil eines Gestänges und/oder zumindest einem im Bereich des Gestänges beweglichen Teiles und/oder einem Pflanzenbestand mit lokalem Hochwuchs handeln. Die so erfassten Messwerte werden vom Spritzgerät, insbesondere einem Steuerungssystem, als nicht plausibel und/oder somit für nicht relevant für die Steuerung und/oder Regelung, insbesondere Führung, des Gestänges eingestuft, womit eine Führung des Gestänges aufgrund von Fehlmessungen nahezu ausgeschlossen werden kann.

In einer Weiterbildung des erfindungsgemäßen Verfahrens umfasst der zumindest eine Referenzwert zumindest einen Zusatzwert, insbesondere Offset. Als Zusatzwert, insbesondere Offset, kann hier zusätzlich zum Abstand der Sensoreinheit zum Gestänge, insbesondere zur Ausbringeinrichtung, zumindest eine, vorzugsweise durch ein Steuerungssystem bereitgestellte, weitere Information verstanden werden. Hierunter sind beispielsweise Umwelteinflüsse, insbesondere Wind, und/oder Geschwindigkeiten, insbesondere Beschleunigungen, des Spritzgerätes, insbesondere der jeweiligen Ausbringeinrichtung, denkbar. Darüber hinaus ist hierunter auch ein auf den Referenzwert aufbauender zusätzlicher Abstand, insbesondere ein Offset, zu verstehen, wobei der Zusatzwert, insbesondere Offset, für alle Ausbringringeinrichtungen gleich und/oder bevorzugt entlang des Gestänges und/oder der Sensoreinheiten variabel ausgeführt sein kann. Der Zusatzwert, insbesondere Offset, kann hierbei negativ und/oder vorzugsweise positiv ausgeführt sein. Bei einem negativen Zusatzwert, insbesondere Offset, kann der Referenzwert zumindest teilweise verkleinert werden. Bei einem positiven Zusatzwert, insbesondere Offset, kann der Referenzwert zumindest teilweise vergrößert werden. Infolge dessen ist der, insbesondere als plausibel und/oder nicht plausibel einzustufende, Messbereich der jeweiligen Sensoreinheiten nahezu beliebig reduzierbar und/oder erweiterbar. Beispielsweise kann somit nur eine landwirtschaftliche Nutzfläche und/oder deren Pflanzenbestand ein positive Plausibilitätsüberprüfung erreichen die sich in einem bestimmten Abstand unterhalb der Ausbringeinrichtung, insbesondere Düsen, und/oder innerhalb eines als plausibel einzustufenden Messbereichs zumindest einer Sensoreinheit befindet. Mittels des zumindest einen Zusatzwertes, insbesondere Offsets, ist somit eine zusätzliche Filterung zum Bewerten der durch die Sensoreinheiten erfassten Messwerte geschaffen und die Wahrscheinlichkeit von Fehlmessungen, insbesondere Störgrößen, deutlich reduziert.

In einer anderen bevorzugten Ausführungsform des erfindungsgemäßen Verfahrens wird der zumindest eine Messwert von zumindest einer Sensoreinheit in Abhängigkeit eines, vorzugsweise vorgegebenen und/oder der zumindest einen Sensoreinheit zugeordneten, Zeitintervalls bewertet. Somit ist eine Überprüfung und/oder Bewertung der Messwerte neben dem Referenzwert zusätzlich von einem zeitlichen Abstand der Messungen abhängig. Das Verfahren kann hierbei derartig ausgeführt sein, dass ein zeitlicher Abstand von mehreren Messwerten zumindest einer Sensoreinheit entweder bei einem Unterschreiten oder einem Überschreiten des Zeitintervalls zur Führung des Gestänges berücksichtigt werden kann. Somit können beispielsweise zum einen vereinzelte Hochwuchsbereiche von Pflanzenbeständen die innerhalb des Zeitintervalls und innerhalb des Referenzwertes und/oder des Zusatzwertes liegen zur Führung des Gestänges berücksichtigt werden. Oberflächen beispielsweise des Gestänges, die von einer nicht ordnungsgemäß ausgerichteten Sensoreinheit über einen längeren Zeitraum erfasst werden, können somit zur weiteren Bewertung ausgeschlossen werden.

In einer anderen Weiterbildung des erfindungsgemäßen Verfahrens umfasst das Bewerten zumindest eines Messwerts zumindest einer Sensoreinheit in Abhängigkeit zumindest eines, vorzugsweise vorgegebenen und/oder der zumindest einen Sensoreinheit zugeordneten, Referenzwertes und/oder Zeitintervalls das Vergleichen des zumindest einen zu bewertenden Messwerts der zumindest einen Sensoreinheit mit dem Referenzwert und/oder Zeitintervall, und/oder das Erfassen einer Signalabweichung zwischen dem zumindest einen zu bewertenden Messwert der zumindest einen Sensoreinheit und dem Referenzwert und/oder Zeitintervall. Hierbei erfolgt ein direkter Messwertvergleich, wodurch beispielsweise ein lokaler Hochwuchs von Pflanzenbeständen und/oder eine Fehlmessung erfasst und bei der Bewertung des Messwerts berücksichtigt werden kann. Innerhalb der Steuerungs- und/oder Regelungsroutine des Spritzgerätes wird der zu bewertende Messwert, der bevorzugt einen Abstand einer landwirtschaftlichen Nutzfläche und/oder deren Pflanzenbestand zur Sensoreinheit darstellt mit dem Referenzwert, der bevorzugt den Abstand zwischen der Sensoreinheit und dem Gestänge, insbesondere der Ausbringeinrichtung, darstellt, verglichen. Der Referenzwert kann hierbei von einem Steuerungssystem abrufbar sein, wobei dieser zuvor drahtlos auf das Steuerungssystem übertragen und/oder von einem Bediener mittels eines Eingabemittels eingegeben wurde. Alternativ kann der Referenzwert aus einer Funktion die im Steuerungssystem des Spritzgerätes hinterlegbar ist berechnet und/oder abgerufen werden. Darüber hinaus werden alternativ oder zusätzlich die zeitlichen Abstände zumindest zweier Messwerte zumindest einer Sensoreinheit, insbesondere die Summe der zeitlichen Abstände, mit einem vorgegebenen Zeitintervall verglichen.

Des Weiteren können hierbei auch die Messwerte einer Sensoreinheit mit den Messwerten zumindest einer weiteren Sensoreinheit verglichen werden. Somit kann beispielsweise der Abstand der landwirtschaftlichen Nutzfläche und/oder deren Pflanzenbestand entlang des Gestänges, insbesondere quer zur Fahrtrichtung, gemittelt und/oder durch Interpolation der Messwerte zwischen zumindest zwei Sensoreinheiten vergleichmäßigt werden.

Bevorzugt ist ferner ein erfindungsgemäßes Verfahren, bei welchem ein bewerteter Messwert einer Sensoreinheit in Abhängigkeit der Messwertbewertung verworfen wird. Alternativ oder zusätzlich kann ein bewerteter Messwert einer Sensoreinheit in Abhängigkeit einer Messwertbewertung durch einen Ersatzwert und/oder den Referenzwert ersetzt werden. Hierbei wird zumindest ein innerhalb der Steuerungs- und/oder Regelungsroutine des Spritzgeräts bewerteter Messwert, insbesondere mit negativer Plausibilitätsprüfung, herausgefiltert und nicht weiter vom Steuerungssystem zur Führung des Gestänges berücksichtigt. Des Weiteren können vorzugsweise mehrere Messwerte zumindest einer Sensoreinheit, die in einem bestimmten Zeitintervall erfasst wurden, verworfen werden. Ferner ist denkbar, dass ein nicht plausibler Messwert durch einen, vorzugsweise vordefinierten, Ersatzwert ersetzt wird. Der Ersatzwert kann hierbei auch zeitlich gesehen zuvor ermittelte Messergebnisse repräsentieren, die bis zur Erfassung plausibler Messwerte für die Führung des Gestänges verwendet werden.

In einer weiteren Weiterbildung des erfindungsgemäßen Verfahrens wird ein oder werden mehrere Auswertsignale auf Grundlage der mehreren Messwerte und/oder Referenzwerte und/oder Zeitintervalle der Sensoreinheiten erzeugt, wobei das Erzeugen des einen oder der mehreren Auswertsignale das Verwerfen und/oder Ersetzen von einem oder mehreren bewerteten Messwerten umfasst. Alternativ oder zusätzlich umfasst das Verfahren das Auswerten des einen oder der mehreren Auswertsignale zum Erzeugen eines Steuersignals für einen oder mehrere Aktoren einer Einrichtung zur Führung des Gestänges des landwirtschaftlichen Spritzgeräts. Das eine oder die mehreren Auswertsignale können beispielsweise einem Steuerungssystem des landwirtschaftlichen Spritzgeräts bereitgestellt werden, wobei das Steuerungssystem des landwirtschaftlichen Spritzgeräts eine Steuerung oder Regelung zum Führen des Gestänges des landwirtschaftlichen Spritzgeräts auf Grundlage des einen oder der mehreren Auswertsignale umsetzt.

Die der Erfindung zugrundeliegende Aufgabe wird ferner durch ein Verfahren zum Führen eines Gestänges der eingangs genannten Art gelöst, wobei das Erfassen des Abstands des Gestänges zu der landwirtschaftlichen Nutzfläche und/oder deren Pflanzenbestand mittels des Verfahrens zum Erfassen des Abstands eines Gestänges eines landwirtschaftlichen Spritzgeräts zu einer landwirtschaftlichen Nutzfläche und/oder deren Pflanzenbestand nach einer der vorstehend beschriebenen Ausführungsformen erfolgt. Hinsichtlich der Vorteile und Modifikationen des Verfahrens zum Führen eines Gestänges eines landwirtschaftlichen Spritzgeräts wird auf die Vorteile und Modifikationen des Verfahrens zum Erfassen des Abstands eines Gestänges eines landwirtschaftlichen Spritzgeräts zu einer landwirtschaftlichen Nutzfläche und/oder deren Pflanzenbestand verwiesen.

Die der Erfindung zugrunde liegende Aufgabe wird ferner durch ein Steuerungssystem der eingangs genannten Art gelöst, wobei das erfindungsgemäße Steuerungssystem dazu eingerichtet ist, das Verfahren zum Erfassen des Abstands eines Gestänges eines landwirtschaftlichen Spritzgeräts zu einer landwirtschaftlichen Nutzfläche und/oder deren Pflanzenbestand nach einer der vorstehend beschriebenen Ausführungsformen und/oder das Verfahren zum Führen eines Gestänges nach einer der vorstehend beschriebenen Ausführungsformen auszuführen.

Vorzugsweise sind die mehreren Sensoreinheiten beabstandet voneinander an einem Gestänge des landwirtschaftlichen Spritzgeräts angeordnet. Die Sensoreinheiten sind vorzugsweise als optische Sensoren, beispielsweise InfrarotSensoren, oder als Ultraschallsensoren oder Radarsensoren ausgebildet.

Die der Erfindung zugrundeliegende Aufgabe wird ferner durch ein landwirtschaftliches Spritzgerät der eingangs genannten Art gelöst, wobei das Steuerungssystem des erfindungsgemäßen landwirtschaftlichen Spritzgeräts nach einer der vorstehend beschriebenen Ausführungsformen ausgebildet ist. Hinsichtlich der Vorteile und Modifikationen des erfindungsgemäßen landwirtschaftlichen Spritzgeräts wird auf die Vorteile und Modifikationen des erfindungsgemäßen Steuerungssystems verwiesen.

Weitere Einzelheiten der Erfindung sind der Beispielsbeschreibung und den Zeichnungen zu entnehmen. Die Zeichnungen zeigen
- Fig. 1: ein Ausführungsbeispiel des erfindungsgemäßen landwirtschaftlichen Spritzgeräts in einer Rückansicht;
- Fig. 2: die Sensoreinheit an einem Gestängesegment des landwirtschaftlichen Spritzgeräts in einer vergrößerten Ansicht; und
- Fig. 3: ein Ablaufdiagramm eines erfindungsgemäßen Verfahrens zum Führen eines Gestänges eines landwirtschaftlichen Spritzgeräts.

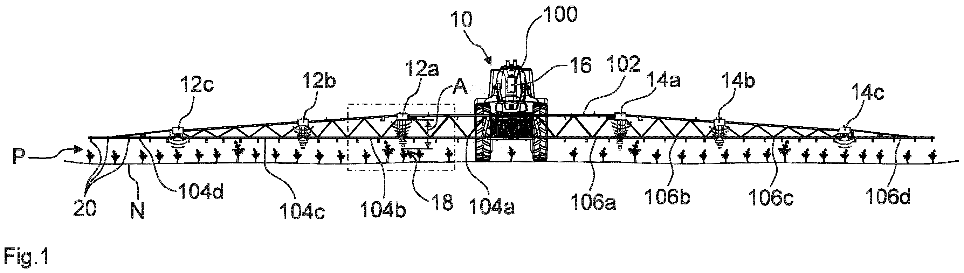

Die Fig. 1 zeigt ein landwirtschaftliches Spritzgerät 100, welches als Feldspritze ausgebildet ist und eine Spritzflüssigkeit, wie etwa Pflanzenschutzmittel, auf eine landwirtschaftliche Nutzfläche N und/oder deren Pflanzenbestand P ausbringt.

Das landwirtschaftliche Spritzgerät 100 weist ein Gestänge 102 auf, an welchem mehrere als Spritzdüsen ausgebildete Ausbringeinrichtungen 20 angeordnet sind. Das Gestänge 102 umfasst mehrere zueinander verschwenkbare Gestängesegmente 104a-104d, 106a-106d, wobei die Gestängesegmente 104a-104d einer ersten Gestängeseite zugeordnet werden können und die Gestängesegmente 106a-106d einer zweiten Gestängeseite.

Das landwirtschaftliche Spritzgerät 100 umfasst ferner ein Steuerungssystem 10 mit mehreren Sensoreinheiten 12a-12c, 14a-14c und einer Datenverarbeitungseinrichtung 16.

Die Sensoreinheiten 12a-12c sind voneinander beabstandet angeordnet und auf der ersten Gestängeseite an dem Gestänge 102 des landwirtschaftlichen Spritzgeräts 100 befestigt. Die Sensoreinheiten 14a-14c sind voneinander beabstandet angeordnet und auf der zweiten Gestängeseite an dem Gestänge 102 des landwirtschaftlichen Spritzgeräts 100 befestigt. Die Sensoreinheiten 12a-12c, 14a-14c sind als Ultraschallsensoren ausgebildet und erzeugen Messwerte, welche Umgebungsinformationen der jeweiligen Sensoreinheiten 12a-12c, 14a-14c umfassen. Die Umgebungsinformationen in den Messwerten der Sensoreinheiten 12a-12c, 14a-14c umfassen Informationen über den Abstand A der jeweiligen Sensoreinheiten 12a-12c, 14a-14c zu der landwirtschaftlichen Nutzfläche N und/oder deren Pflanzenbestand P.

Die Datenverarbeitungseinrichtung 16 verarbeitet die von den Sensoreinheiten 12a-12c, 14a-14c zur Verfügung gestellten Messwerte, um den Abstand A des Gestänges 102 des landwirtschaftlichen Spritzgeräts 100 zu der landwirtschaftlichen Nutzfläche N und/oder deren Pflanzenbestand P zu erfassen und das Gestänge 102 auf Grundlage des erfassten Abstands A des Gestänges 102 des landwirtschaftlichen Spritzgeräts 100 zu der landwirtschaftlichen Nutzfläche N und/oder deren Pflanzenbestand P zu führen. Zum Führen des Gestänges 102 des landwirtschaftlichen Spritzgeräts 100 wird ein oder werden mehrere Aktoren einer Einrichtung zur Führung des Gestänges 102 des landwirtschaftlichen Spritzgeräts 100 in Abhängigkeit des erfassten Abstands A des Gestänges 102 zu der landwirtschaftlichen Nutzfläche N und/oder deren Pflanzenbestand P gesteuert.

Zum Erfassen des Abstands A des Gestänges 102 des landwirtschaftlichen Spritzgeräts 100 zu der landwirtschaftlichen Nutzfläche N und/oder deren Pflanzenbestand P werden die von den Sensoreinheiten 12a-12c, 14a-14c erzeugten Messwerte in Abhängigkeit vorgegebener und den jeweiligen Sensoreinheiten 12a-12c, 14a-14c zugeordneter Referenzwerte 22 und/oder Zeitintervalle bewertet, insbesondere um die Messwerte hinsichtlich ihrer Signalplausibilität und ihrer Verwertbarkeit zu prüfen. Auf Grundlage der Messwertbewertung können dann ein oder mehrere Auswertsignale erzeugt werden, wobei das Erzeugen des einen oder der mehreren Auswertsignale ein Verwerfen und/oder Ersetzen von einem oder mehrerer bewerteter Messwerte umfassen kann. Anschließend wird das eine oder werden die mehreren Auswertsignale zum Erzeugen eines Steuersignals für einen Aktor einer Einrichtung zur Führung des Gestänges 102 des landwirtschaftlichen Spritzgeräts 100 ausgewertet, sodass eine entsprechende Gestängeführung umgesetzt werden kann.

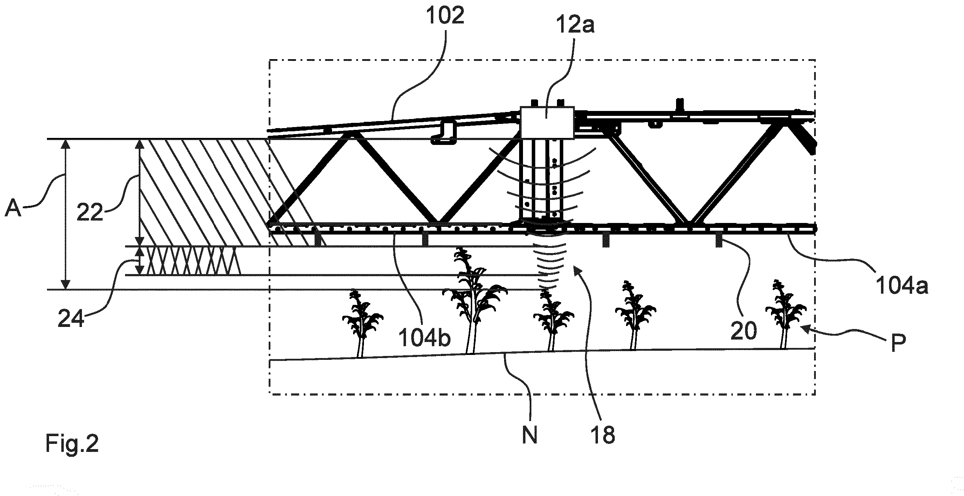

Eine vergrößerte Ansicht der Anordnung einer Sensoreinheit 12a an dem Gestänge 102 ist in der Fig. 2 gezeigt. Die Sensoreinheit 12a ist an einem oberen Träger des Gestänges 102 angeordnet und sendet zur Erfassung des Abstands A einen Messkegel 18, insbesondere elektrische Schallwellen, in Richtung der landwirtschaftlichen Nutzfläche N und/oder deren Pflanzenbestand P aus. Der Abstand A umfasst hierbei zumindest zwei weitere Bereiche. Der erste Bereich repräsentiert einen Bereich der abhängig von dem Referenzwert 22 ist. Der Referenzwert 22 ist auf dem Steuerungssystem 10, insbesondere der Datenverarbeitungseinrichtung 16, und/oder auf einer jeweiligen Sensoreinheit 12a-12c, 14a-14c, vorzugsweise individuell für jede Sensoreinheit 12a-12c, 14a-14c, hinterlegbar und zur Bewertung der erfassten Messwerte der Sensoreinheiten 12a-12c, 14a-14c abrufbar. Dieser umfasst Informationen über die Montageposition der jeweiligen Sensoreinheiten 12a-12c, 14a-14c und/oder den Abstand zwischen der jeweiligen Sensoreinheit 12a-12c, 14a-14c und zumindest einer Oberfläche des Gestänges 102, insbesondere der am Gestänge 102 angeordneten Ausbringeinrichtung 20. Alternativ oder zusätzlich ist der Referenzwert 22 mittels eines Eingabemittels, das dem Spritzgerät 100 zugeordnet ist, von einem Bediener eingebbar. Der zweite Bereich, insbesondere die Größe des zweiten Bereichs, ist abhängig von einem Zusatzwert, insbesondere Offset 24, den der Referenzwert 22 umfasst. Dieser dient in erster Linie dazu den Referenzwert 22 flexibel und einfach, vorzugsweise global für alle Sensoreinheiten 12a-12c, 14a-14c gleichzeitig, anpassen zu können.

Wird eine Oberfläche der landwirtschaftlichen Nutzfläche N und/oder deren Pflanzenbestand P von der Sensoreinheit 12a, insbesondere dem Messkegel 18, außerhalb der Bereiche, insbesondere Abstände, die den Referenzwert 22 und/oder den Zusatzwert, insbesondere Offset 24, darstellen erfasst, wird der Messwert von dem Steuerungssystem 10, insbesondere der Datenverarbeitungseinrichtung 16, als plausible eingestuft. Demzufolge wird der so erfasste Messwert, insbesondere Abstand A, zur Steuerung, insbesondere Führung, des Gestänges 102 genutzt.

Wird hingegen eine Oberfläche der landwirtschaftlichen Nutzfläche N und/oder deren Pflanzenbestand P von der Sensoreinheit 12a, insbesondere dem Messkegel 18, innerhalb der Bereiche, insbesondere Abstände, die den Referenzwert 22 und/oder den Zusatzwert, insbesondere Offset 24, darstellen erfasst, wird der Messwert von dem Steuerungssystem 10, insbesondere der Datenverarbeitungseinrichtung 16, als nicht plausible eingestuft. Demzufolge wird der so erfasste Messwert, insbesondere Abstand A, nicht zur Steuerung, insbesondere Führung, des Gestänges 102 genutzt.

Darüber hinaus kann zur Bewertung von Messwerten zusätzlich zumindest ein den jeweiligen Sensoreinheiten 12a-12c, 14a-14c zugeordnetes Zeitintervall berücksichtigt werden. Hierbei ist die Bewertung der Messwerte derartig erweiterbar, dass eine innerhalb des Referenzwertes 22 und/oder Zusatzwertes, insbesondere Offsets 24, erfasste Oberfläche als plausibel bzw. nicht plausibel eingestuft werden kann sobald mehrere zeitlich beabstandete Messwerte innerhalb bzw. außerhalb des Zeitinterfalls erfasst werden.

Das zumindest eine für die jeweiligen Sensoreinheiten 12a-12c, 14a-14c zugeordnete Zeitintervall ist dabei von dem Steuerungssystem 10, insbesondere der Datenverarbeitungseinrichtung 16, abrufbar und/oder mittels eines mobilen Eingabemittels vorab von einem Bediener hinterlegbar, insbesondere eingebbar.

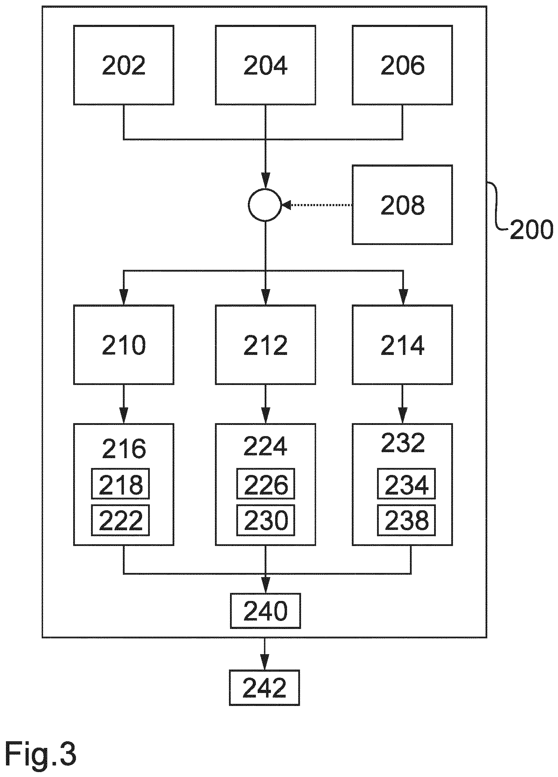

Die Fig. 3 zeigt ein Ablaufdiagramm eines Verfahrens zum Führen eines Gestänges 102 eines landwirtschaftlichen Spritzgeräts 100. Das Verfahren wird durch den nachfolgenden Schritt eingeleitet:
200) Erfassen des Abstands A des Gestänges 102 des landwirtschaftlichen Spritzgeräts 100 zu einer landwirtschaftlichen Nutzfläche N und/oder deren Pflanzenbestand P.

Im Rahmen der Erfassung des Abstands A des Gestänges 102 des landwirtschaftlichen Spritzgeräts 100 zu einer landwirtschaftlichen Nutzfläche N und/oder deren Pflanzenbestand P werden zunächst die folgenden drei Schritte zeitgleich ausgeführt:
202) Erzeugen eines Messwerts mittels einer ersten Sensoreinheit 12a, wobei der Messwert Angaben zum Abstand A der ersten Sensoreinheit 12a zu der landwirtschaftlichen Nutzfläche N und/oder deren Pflanzenbestand P umfasst;
204) Erzeugen eines Messwerts mittels einer zweiten Sensoreinheit 12b, wobei der Messwert Angaben zum Abstand A der zweiten Sensoreinheit 12b zu der landwirtschaftlichen Nutzfläche N und/oder deren Pflanzenbestand P umfasst; und
206) Erzeugen eines Messwerts mittels einer dritten Sensoreinheit 12c, wobei der Messwert Angaben zum Abstand A der dritten Sensoreinheit 12c zu der landwirtschaftlichen Nutzfläche N und/oder deren Pflanzenbestand P umfasst.

Die Sensoreinheiten 12a-12c sind beabstandet voneinander auf einer ersten Gestängeseite an dem Gestänge 102 des landwirtschaftlichen Spritzgeräts 100 angeordnet. Somit sind die Sensoreinheiten 12a-12c quer zur Fahrtrichtung des landwirtschaftlichen Spritzgeräts 100 angeordnet.

Das landwirtschaftliche Spritzgerät 100 verfügt über unabhängig voneinander neigbare und/oder höhenverstellbare Gestängeseiten. Mithin können im Rahmen des Verfahrens auch Messwerte von Sensoreinheiten 14a-14c, welche auf einer zweiten Gestängeseite angeordnet sind, erzeugt werden. Diese Messwerte betreffen dann Angaben zum Abstand A der Sensoreinheiten 14a-14c der zweiten Gestängeseite zu der landwirtschaftlichen Nutzfläche N und/oder deren Pflanzenbestand P. Alternativ kann das landwirtschaftliche Spritzgerät 100 über ein Gestänge 102 verfügen, dessen Seiten nicht unabhängig voneinander neigbar und/oder höhenverstellbar sind. Hierbei hat das Neigen und/oder Führen der ersten Gestängeseite einen direkt Einfluss auf die Neigung und/oder Höhe der zweiten Gestängeseite. Beispielsweise kann die erste Gestängeseite hierbei nach unten geneigt und/oder geführt werden, während die zweite Gestängeseite hierbei gleichzeitig nach oben geneigt und/oder geführt wird. In diesem Fall können die in dem Verfahren genutzten Sensoreinheiten 12a-12c, 14a-14c auf einer oder auf beiden Seiten des Gestänges 102 angeordnet sein.

Nachdem die Messwerte durch die Sensoreinheiten 12a-12c der ersten Gestängeseite erzeugt wurden, kann der folgende Schritt ausgeführt werden:
208) Abrufen eines oder mehrerer Referenzwerte 22 und/oder Zeitintervalle welche von den jeweiligen Sensoreinheit 12a-12c und den Sensoreinheiten 12a-12c zugeordneter Ausbringeinrichtung 20 abhängig sind.

In analoger Weise kann zusätzlich innerhalb zumindest eines Referenzwertes 22 ein vordefinierter, beispielsweise durch die Eingabe eines Bedieners, und/oder von einem Steuerungssystem 10 abgerufener Zusatzwert, insbesondere Offset 24, hinterlegt sein. Dieser dient in vorteilhafterweise dazu zumindest einen Referenzwert 22 zumindest einer Sensoreinheit 12a-12c, 14a-14c zu verkleinern oder zu vergrößern.

Sobald ein oder mehrere Referenzwerte 22 und/oder Zeitintervalle abgerufen wurden, können die folgenden Schritte ausgeführt werden:
210) Bewerten des Messwerts der ersten Sensoreinheit 12a der ersten Gestängeseite in Abhängigkeit eines den jeweiligen Sensoreinheit 12a-12c und/oder Ausbringeinrichtung 20 zugeordneter Referenzwert 22 und/oder Zeitintervall;
212) Bewerten des Messwerts der zweiten Sensoreinheit 12b der ersten Gestängeseite in Abhängigkeit eines den jeweiligen Sensoreinheit 12a-12c und/oder Ausbringeinrichtung 20 zugeordneter Referenzwert 22 und/oder Zeitintervall; und
214) Bewerten des Messwerts der dritten Sensoreinheit 12c der ersten Gestängeseite in Abhängigkeit eines den jeweiligen Sensoreinheit 12a-12c und/oder Ausbringeinrichtung 20 zugeordneter Referenzwert 22 und/oder Zeitintervall.

Das Bewerten der Messwerte der Sensoreinheiten 12a-12c der ersten Gestängeseite umfasst das Vergleichen des jeweils zu bewertenden Messwerts mit den Referenzwerten 22, insbesondere dem zumindest einen Offset 24, und/oder den Zeitintervallen, welche von den quer zur Fahrtrichtung des landwirtschaftlichen Spritzgeräts 100 angeordneten Sensoreinheiten 12a-12c und/oder Ausbringeinrichtungen 20 der ersten Gestängeseite abhängig sind, und das Erfassen einer Signalabweichung zwischen den zu bewertenden Messwerten der Sensoreinheiten 12a-12c der ersten Gestängeseite und den Referenzwerten 22 und/oder des Zeitintervalls.

Das Bewerten der Messwerte der Sensoreinheiten 14a-14c der zweiten Gestängeseite kann demnach das Vergleichen des jeweils zu bewertenden Messwerts mit den Referenzwerten 22, insbesondere dem zumindest einen Offset 24, und/oder den Zeitintervallen, welche von den quer zur Fahrtrichtung des landwirtschaftlichen Spritzgeräts 100 angeordneten Sensoreinheiten 14a-14c und/oder Ausbringeinrichtungen 20 der zweiten Gestängeseite abhängig sind, und das Erfassen einer Signalabweichung zwischen den zu bewertenden Messwerten der Sensoreinheiten 14a-14c der zweiten Gestängeseite und den Referenzwerten 22 und/oder Zeitintervallen umfassen.

Der oben beschriebene Bewertungsvorgang wiederholt sich ständig, sodass der folgende Schritt ausgeführt werden kann:
216) Erzeugen eines ersten Auswertsignals auf Grundlage der Messwerte und/oder Referenzwerte 22 und/oder der Zeitintervalle der Sensoreinheiten 12a-12c der ersten Gestängeseite.

Beim Erzeugen des ersten Auswertsignals kann zumindest einer der folgenden Schritte einmalig oder mehrfach ausgeführt werden:
218) Verwerfen eines bewerteten Messwerts der ersten Sensoreinheit 12a der ersten Gestängeseite in Abhängigkeit der Messwertbewertung,
222) Ersetzen eines bewerteten Messwerts der ersten Sensoreinheit 12a der ersten Gestängeseite in Abhängigkeit der Messwertbewertung durch einen Ersatzwert, wobei der Ersatzwert ein zuvor erfasster und zwischengespeicherter Messwert ist, und/oder Referenzwert 22.

Ferner kann analog der folgende Schritt ausgeführt werden:
224) Erzeugen eines zweiten Auswertsignals auf Grundlage der Messwerte und/oder Referenzwerte 22 und/oder der Zeitintervalle der Sensoreinheiten 12a-12c der ersten Gestängeseite.

Beim Erzeugen des zweiten Auswertsignals kann zumindest einer der folgenden Schritte einmalig oder mehrfach ausgeführt werden:
226) Verwerfen eines bewerteten Messwerts der zweiten Sensoreinheit 12b der ersten Gestängeseite in Abhängigkeit der Messwertbewertung,
230) Ersetzen eines bewerteten Messwerts der zweiten Sensoreinheit 12b der ersten Gestängeseite in Abhängigkeit der Messwertbewertung durch einen Ersatzwert, wobei der Ersatzwert ein zuvor erfasster und zwischengespeicherter Messwert ist, und/oder Referenzwert 22.

Ferner kann analog der folgende Schritt ausgeführt werden kann:
232) Erzeugen eines dritten Auswertsignals auf Grundlage der Messwerte und/oder Referenzwerte 22 und/oder der Zeitintervalle der Sensoreinheiten 12a-12c der ersten Gestängeseite.

Beim Erzeugen des dritten Auswertsignals kann zumindest einer der folgenden Schritte einmalig oder mehrfach ausgeführt werden:
234) Verwerfen eines bewerteten Messwerts der dritten Sensoreinheit 12c der ersten Gestängeseite in Abhängigkeit der Messwertbewertung,
238) Ersetzen eines bewerteten Messwerts der dritten Sensoreinheit 12c der ersten Gestängeseite in Abhängigkeit der Messwertbewertung durch einen Ersatzwert, wobei der Ersatzwert ein zuvor erfasster und zwischengespeicherter Messwert ist, und/oder Referenzwert 22.

Das Erzeugen der Auswertsignale kann auch auf Grundlage der Messwerte und/oder Referenzwerte 22 und/oder der Zeitintervalle der Sensoreinheiten 14a-14c der zweiten Gestängeseite erfolgen.

Das Verwerfen und Ersetzen von Messwerten erfolgt, wenn die Abweichung zwischen dem Messwert einer Sensoreinheit 12a-12c und dem jeweiligen Referenzwert 22 und/oder Zeitintervall eine Abweichungsschwelle überschreitet oder unterschreitet. Auf Grundlage der Auswertsignale kann das Erfassen des Abstands A des Gestänges 102 des landwirtschaftlichen Spritzgeräts 100 zu der landwirtschaftlichen Nutzfläche N und/oder deren Pflanzenbestand P mit dem folgenden Schritt abgeschlossen werden:
240) Auswerten der Auswertsignale zum Erzeugen eines Steuersignals für einen oder mehrere Aktoren einer Einrichtung zur Führung des Gestänges 102 des landwirtschaftlichen Spritzgeräts 100.

Nachdem ein Steuersignal für den einen oder die mehreren Aktoren der Einrichtung zur Führung des Gestänges 102 des landwirtschaftlichen Spritzgeräts 100 erzeugt wurde, kann das Verfahren zum Führen des Gestänges 102 des landwirtschaftlichen Spritzgeräts 100 mit dem folgenden Schritt abgeschlossen werden:
242) Steuern des einen oder der mehreren Aktoren der Einrichtung zur Führung des Gestänges 102 des landwirtschaftlichen Spritzgeräts 100 in Abhängigkeit des erfassten Abstands A des Gestänges 102 zu der landwirtschaftlichen Nutzfläche N und/oder deren Pflanzenbestand P.

Zusätzlich zum oben Beschriebenen Ablauf des Verfahrens zur Führung des Gestänges 102 ist denkbar, dass das Bewerten der Messwerte und/oder das Steuern der Aktoren durch einen Vergleich mehrerer Messwerte von mehreren Sensoreinheiten 12a-12c, 14a-14c abhängig sind. Dies dient insbesondere dazu, von den Sensoreinheiten 12a-12c, 14a-14c erfasste Abstände A die sich stark unterscheiden zumindest teilweise zu vergleichmäßigen und somit ein homogeneres Steuern und/oder Regeln des Gestänges 102 mittels der Aktoren zu erreichen.

### Bezugszeichenliste

- 10: Steuerungssystem
- 12a-12c: Sensoreinheiten
- 14a-14c: Sensoreinheiten
- 16: Datenverarbeitungseinrichtung
- 18: Messkegel
- 20: Ausbringeinrichtung
- 22: Referenzwert
- 24: Zusatzwert, Offset

- 100: Spritzgerät
- 102: Gestänge
- 104a-104d: Gestängesegmente
- 106a-106d: Gestängesegmente

- N: Nutzfläche
- P: Pflanzenbestand
- A: Abstand

## Patentansprüche

1. Verfahren zum Erfassen des Abstands (A) eines Gestänges (102) eines landwirtschaftlichen Spritzgeräts (100), insbesondere einer Feldspritze, zu einer landwirtschaftlichen Nutzfläche (N) und/oder deren Pflanzenbestand (P), mit dem Schritt:
- Erzeugen zumindest eines Messwertes mittels zumindest einer Sensoreinheit (12a-12c, 14a-14c), vorzugsweise mehreren Sensoreinheiten (12a-12c, 14a-14c), wobei die zumindest eine Sensoreinheit (12a-12c, 14a-14c), vorzugsweise die mehreren Sensoreinheiten (12a-12c, 14a-14c) beabstandet voneinander, an einem Gestänge (102) des landwirtschaftlichen Spritzgeräts (100) angeordnet ist und der zumindest eine Messwert Umgebungsinformationen der jeweiligen Sensoreinheit (12a-12c, 14a-14c) umfasst;
**gekennzeichnet durch den Schritt:**
- Bewerten zumindest eines Messwerts von zumindest einer Sensoreinheit (12a-12c, 14a-14c) in Abhängigkeit zumindest eines, vorzugsweise vorgegebenen und/oder der zumindest einen Sensoreinheit (12a-12c, 14a-14c) zugeordneten, Referenzwertes (22).

2. Verfahren nach Anspruch 1, **dadurch gekennzeichnet, dass** der zumindest eine Referenzwert (22) zumindest einen Grenzwert und/oder zumindest einen Grenzbereich umfasst.

3. Verfahren nach zumindest einem der vorstehenden Ansprüche, **dadurch gekennzeichnet, dass** der zumindest eine Referenzwert (22) Informationen über den Abstand zwischen der jeweiligen Sensoreinheit (12a-12c, 14a-14c) und zumindest einer Oberfläche des Gestänges (102), insbesondere einer an dem Gestänge (102) angeordneten Ausbringeinrichtung (20), umfasst.

4. Verfahren nach zumindest einem der vorstehenden Ansprüche, **dadurch gekennzeichnet, dass** der zumindest eine Referenzwert (22) zumindest einen Zusatzwert, insbesondere Offset (24), umfasst.

5. Verfahren nach zumindest einem der vorstehenden Ansprüche, **dadurch gekennzeichnet, dass** der zumindest eine Messwert von zumindest einer Sensoreinheit (12a-12c, 14a-14c) in Abhängigkeit eines, vorzugsweise vorgegebenen und/oder der zumindest einen Sensoreinheit (12a-12c, 14a-14c) zugeordneten, Zeitintervalls bewertet wird.

6. Verfahren nach zumindest einem der vorstehenden Ansprüche,
**durch gekennzeichnet, dass** das Bewerten zumindest eines Messwerts zumindest einer Sensoreinheit (12a-12c, 14a-14c) in Abhängigkeit zumindest eines, vorzugsweise vorgegebenen und/oder der zumindest einen Sensoreinheit (12a-12c, 14a-14c) zugeordneten, Referenzwertes (22) und/oder Zeitintervalls zumindest einen der folgenden Schritte umfasst:
- Vergleichen des zumindest einen zu bewertenden Messwerts der zumindest einen Sensoreinheit (12a-12c, 14a-14c) mit dem Referenzwert (22);
- Erfassen einer Signalabweichung zwischen dem zumindest einen zu bewertenden Messwert der zumindest einen Sensoreinheit (12a-12c, 14a-14c) und dem Referenzwert (22).

7. Verfahren nach zumindest einem der vorstehenden Ansprüche,
**gekennzeichnet durch zumindest einen der folgenden Schritte:**
- Verwerfen eines bewerteten Messwerts einer Sensoreinheit (12a-12c, 14a-14c) in Abhängigkeit der Messwertbewertung;
- Ersetzen eines bewerteten Messwerts einer Sensoreinheit (12a-12c, 14a-14c) in Abhängigkeit der Messwertbewertung durch einen Ersatzwert und/oder des Referenzwert (22).

8. Verfahren nach zumindest einem der vorstehenden Ansprüche,
**gekennzeichnet durch zumindest einen der folgenden Schritte:**
- Erzeugen von einem oder mehreren Auswertsignalen auf Grundlage der mehreren Messwerte und/oder Referenzwerte (22) und/oder eines Zeitintervalls der Sensoreinheiten (12a-12c, 14a-14c), wobei das Erzeugen des einen oder der mehreren Auswertsignale das Verwerfen und/oder Ersetzen von einem oder mehreren bewerteten Messwerten umfasst;
- Auswerten des einen oder der mehreren Auswertsignale zum Erzeugen eines Steuersignals für einen oder mehrere Aktoren einer Einrichtung zur Führung des Gestänges (102) des landwirtschaftlichen Spritzgeräts (100).

9. Verfahren zum Führen eines Gestänges (102) eines landwirtschaftlichen Spritzgeräts (100), insbesondere einer Feldspritze, mit den Schritten:
- Erfassen des Abstands (A) des Gestänges (102) des landwirtschaftlichen Spritzgeräts (100) zu einer landwirtschaftlichen Nutzfläche (N) und/oder deren Pflanzenbestand (P);
- Steuern von einem oder mehreren Aktoren einer Einrichtung zur Führung des Gestänges (102) des landwirtschaftlichen Spritzgeräts (100) in Abhängigkeit des erfassten Abstands (A) des Gestänges (102) zu der landwirtschaftlichen Nutzfläche (N) und/oder deren Pflanzenbestand (P);
**dadurch gekennzeichnet, dass** das Erfassen des Abstands (A) des Gestänges (102) zu der landwirtschaftlichen Nutzfläche (N) und/oder deren Pflanzenbestand (P) mittels des Verfahrens zum Erfassen des Abstands (A) eines Gestänges (102) eines landwirtschaftlichen Spritzgeräts (100) zu einer landwirtschaftlichen Nutzfläche (N) und/oder deren Pflanzenbestand (P) nach einem der vorstehenden Ansprüche erfolgt.

10. Steuerungssystem (10) für ein landwirtschaftliches Spritzgerät (100), insbesondere für eine Feldspritze, mit
- zumindest einer Sensoreinheit (12a-12c, 14a-14c), vorzugsweise mehreren Sensoreinheiten (12a-12c, 14a-14c), welche dazu eingerichtet ist, zumindest einen Messwert zu erzeugen, wobei der zumindest eine Messwert Umgebungsinformationen der jeweiligen Sensoreinheit (12a-12c, 14a-14c) umfasst; und
- einer Datenverarbeitungseinrichtung (16), welche dazu eingerichtet ist, die von der zumindest einen Sensoreinheiten (12a-12c, 14a-14c) zur Verfügung gestellten Messwerte zu verarbeiten;
**dadurch gekennzeichnet, dass** das Steuerungssystem (10) dazu eingerichtet ist, das Verfahren zum Erfassen des Abstands (A) eines Gestänges (102) eines landwirtschaftlichen Spritzgeräts (100) zu einer landwirtschaftlichen Nutzfläche (N) und/oder deren Pflanzenbestand (P) nach einem der Ansprüche 1 bis 8 und/oder das Verfahren zum Führen eines Gestänges (102) nach Anspruch 9 auszuführen.

11. Landwirtschaftliches Spritzgerät (100), insbesondere Feldspritze, mit
- einem Steuerungssystem (10);
**dadurch gekennzeichnet, dass** das Steuerungssystem (10) nach Anspruch 10 ausgebildet ist.
